# EUROPÄISCHE PATENTSCHRIFT

(11) **EP 0 952 169 B1**
(45) Veröffentlichungstag und Bekanntmachung des Hinweises auf die Patenterteilung: **07.12.2005**
(21) Anmeldenummer: 99107084.8
(22) Anmeldetag: 12.04.1999
(51) Int. Cl.: C08G 18/48, C08J 9/14, C08G 18/66

(54) **Verfahren zur Herstellung von Polyurethan-Hartschaumstoffen mit einer verminderten Wärmeleitfähigkeit und ihre Verwendung**
Process for the preparation of polyurethane rigid foams with reduced heat conductivity and their use
Procédé pour la préparation de mousses de polyuréthane rigides ayant une conductivité thermique réduite et leur utilisation

(30) Priorität: 20.04.1998 DE 19817507
(43) Veröffentlichungstag der Anmeldung: 27.10.1999
(73) Patentinhaber: BASF Aktiengesellschaft, 67056 Ludwigshafen (DE)
(72) Erfinder: Rotermund, Udo Dr., 01990 Ortrand (DE); Knorr, Gottfried Dr., 01987 Schwarzheide (DE); Hayama, Yoshihiko, 67056 Ludwigshafen (DE); Holle, Joachim, 49448 Lemförde (DE); Seifert, Holger Dr., 49163 Bohmte (DE)

(56) Entgegenhaltungen:
- EP-A- 0 199 938
- EP-A- 0 256 252
- EP-A- 0 293 060
- EP-A- 0 397 378
- EP-A- 0 708 127
- CHEMICAL ABSTRACTS, vol. 117, no. 18, 2. November 1992 (1992-11-02) Columbus, Ohio, US; abstract no. 172799t, "rigid polyurethane foam products and their manufacture" Seite 52; XP000375984 & JP 04 103613 A (HITACHI) 6. April 1992 (1992-04-06)

## Beschreibung

Gegenstände der Erfindung sind ein Verfahren zur Herstellung von Polyurethan- im folgenden abgekürzt PU genannt - Hartschaumstoffen mit verminderter Wärmeleitfähigkeit, insbesondere unter 18 mW/mK, durch Umsetzung von a) organischen, vorzugsweise aromatischen Polyisocyanaten mit b) Verbindungen, die mindestens zwei reaktive Wasserstoffatome besitzen, und gegebenenfalls c) von b) verschiedenen H-funktionellen Kettenverlängerungs- und/oder Vernetzungsmitteln in Gegenwart von d) Treibmitteln, e) Katalysatoren und gegebenenfalls f) Zusatzstoffen und die Verwendung dieser PU-Hartschaumstoffe zum Ausschäumen von Hohlräumen in Kühlmöbeln oder Heizungselementen sowie als Dämmstoff für Verbundelemente.

Die Herstellung von Verbund- oder Sandwichelementen, die aufgebaut sind aus einem PU-Hartschaumstoff und mindestens einer Deckschicht aus einem starren oder elastischen Material, wie z.B. Papier, Kunststoffolien, Metallblechen, Glasvliesen, Spanplatten u.a., ist bekannt. Bekannt ist ferner die Ausschäumung von Hohlräumen in Haushaltsgeräten, wie Kühlmöbeln, beispielsweise Kühlschränken oder -truhen oder von Heißwasserspeichern, mit PU-Hartschaumstoff als Wärmedämmstoff. Um Schaumfehlstellen zu vermeiden, muß hierzu das schäumfähige PU-Reaktionsgemisch innerhalb einer kurzen Zeit in den zu isolierenden Hohlraum eingefüllt werden. Zum Ausschäumen derartiger Gegenstände werden üblicherweise Niederdruck- oder vorzugsweise Hochdruckmaschinen eingesetzt.

Eine zusammenfassende Übersicht über die Herstellung von PU-Hartschaumstoffen und ihre Verwendung als Deck- oder vorzugsweise Kernschicht in Verbundelementen sowie ihre Anwendung als Dämmschicht in der Kühl- oder Heizungstechnik wurde z.B. publiziert in Polyurethane, Kunststoff-Handbuch, Band 7, 1. Auflage 1966, herausgegeben von Dr. R. Vieweg und Dr. A. Höchtlen, und 2. Auflage 1983, herausgegeben von Dr. Günter Oertel, Carl Hanser Verlag, München, Wien.

Hierfür geeignete wärme- und kältedämmende PU-Hartschaumstoffe können bekanntermaßen durch Umsetzung von organischen Polyisocyanaten mit einer oder mehreren höhermolekularen Verbindungen mit mindestens zwei reaktiven Wasserstoffatomen, vorzugsweise Polyester- und/oder Polyether-polyole, sowie üblicherweise unter Mitverwendung von niedermolekularen Kettenverlängerungsmitteln und/oder Vernetzungsmitteln in Gegenwart von Treibmitteln, Katalysatoren oder gegebenenfalls Hilfsmitteln und/oder Zusatzstoffen hergestellt werden. Bei geeigneter Wahl der Aufbaukomponenten können hierbei PU-Hartschaumstoffe erhalten werden mit einer niedrigen Wärmeleitzahl und guten mechanischen Eigenschaften.

Als Treibmittel zur Herstellung der wärme- und kältedämmenden PU-Hartschaumstoffe wurden weltweit in großem Maßstab Fluorchloralkane (FCKW), vorzugsweise Trichlorfluormethan, eingesetzt. Nachteilig an diesen Treibgasen ist lediglich die Belastung der Umwelt, da sie in Verdacht stehen, in der Stratosphäre am Abbau der Ozonschicht beteiligt zu sein.

Es hat daher nicht an Versuchen gefehlt, die FCKW durch Treibmittel, die nur geringe oder zweckmäßigerweise keine Umweltschäden verursachen, zu ersetzen.

Nach Angaben der EP-A-351 614 (US-A-4 972 002) können als Treibmittel fluorierte Kohlenwasserstoffe, perfluorierte Kohlenwasserstoffe, Schwefelhexafluorid oder Mischungen aus mindestens zwei dieser Verbindungen verwendet werden. Da diese fluorierten oder perfluorierten Treibmittel in den Aufbaukomponenten zur Herstellung der Polyisocyanat-Polyadditionsprodukte schwer- oder unlöslich sind, werden sie in mindestens einem organischen und/oder modifizierten organischen Polyisocyanat, mindestens einer höhermolekularen Verbindung mit mindestens zwei reaktiven Wasserstoffatomen oder einer Mischung aus mindestens einer höhermolekularen Verbindung mit mindestens zwei reaktiven Wasserstoffatomen und einem niedermolekularen Kettenverlängerungs- und/oder Vernetzungsmittel emulgiert. Nach dieser Methode können zellige Kunststoffe mit gleichmäßiger und feiner Zellstruktur hergestellt werden. Nachteilig an diesem Verfahren sind die geringe Auswahl an geeigneten fluorierten oder perfluorierten Verbindungen mit einem Siedepunkt in dem erforderlichen Siedepunktsbereich, der hohe Preis für diese Treibmittel und deren noch immer beträchtliches Treibhauspotential. Um zellhaltige Kunststoffe mit der technisch gewünschten Zellstruktur zu erhalten, ist man auf eine eng begrenzte Auswahl von Mischungen aus Perfluorpentan und Perfluorhexan angewiesen.

Zur Herstellung von zellhaltigen Kunststoffen nach dem Polyisocyanat-Polyadditionsverfahren haben sich nach Angaben der DE-A-41 43 148 als Treibmittel (d), gegebenenfalls in Verbindung mit Wasser, auch sehr gut Mischungen bewährt, die enthalten mindestens eine niedrigsiedende, in den Aufbaukomponenten (a), (b) oder (c) schwer- oder unlösliche, fluorierte oder perfluorierte, organische Verbindung und mindestens ein Isoalkan mit 6 bis 12 Kohlenstoffatomen.

PU-Hartschaumstoffe mit geringer Wärmeleitfähigkeit werden ferner in der EP-A-0 421 269 (US-A-5 096 933) beschrieben. Als Treibmittel verwendet werden, vorzugsweise in Kombination mit Wasser, Cyclopentan oder Mischungen, zweckmäßigerweise mit einem Siedepunkt unter 50°C, die enthalten: Cyclopentan und/oder Cyclohexan und mindestens eine inerte, niedrigsiedende, mit Cyclopentan und/oder Cyclohexan homogen mischbare Verbindung, vorzugsweise aus der Gruppe der Alkane, Cycloalkane mit maximal 4 Kohlenstoffatomen, Dialkylether, Cycloalkylenether und Fluoralkane.

In EP 293 060 und JP-A-4103 613 werden Polyurethan-Hartschaumstoffe beschrieben, die unter Verwendung von Polyetheralkoholen auf Basis von Trimethylolpropan und Propylenoxid sowie unter Verwendung von FCKW als Treibmittel hergestellt wurden.

Durch eine geeignete Auswahl der Treibmittel, die als zellgas über einen beträchtlichen Zeitraum im PU-Hartschaumstoff verbleiben, da ihre Diffusionsrate sehr gering ist, insbesondere, wenn die PU-Hartschaumstoffe allseitig mit Kunststoff- oder Metalldeckschichten versehen sind, konnte die Wärmeleitfähigkeit der PU-Hartschaumstoffe beträchtlich vermindert werden.

Da der Wärmetransport von einer warmen zu einer kalten Stelle in einem Schaumstoff beispielsweise über die Schaumstoffmatrix, über das zellgas und durch Strahlung erfolgen kann, besteht weiterhin das Bedürfnis, die Wärmeleitfähigkeit von PU-Hartschaumstoffen durch geeignete Maßnahmen zu minimieren und dadurch den Energieverbrauch, z.B. in Kühlmöbeln, oder die Wärmeabgabe, z.B. von Heizungssystemen, insbesondere Fernheizungssystemen und Warmwasserspeichern durch Dämmelemente zu verringern.

Die Aufgabe der vorliegenden Erfindung bestand darin, die Wärmeleitfähigkeit von PU-Hartschaum-stoffen weiter zu reduzieren. Die Wärmeleitfähigkeit sollte dabei kleiner 18 mW/mK betragen. Hierbei sollte auf die Verwendung von toxischen und/oder umweltschädlichen Treibmitteln möglichst vollständig verzichtet werden. Die Polyol- und Polyisocyanatkomponenten (A) bzw. (B) sollten lagerbeständig sein und die Reaktionsmischung zur Herstellung der PU-Hartschaumstoffe sollte sehr gut fließfähig sein und schrumpffrei aushärten. Beim Ausschäumen von Gehäuseteilen sollte ein starker Verbund zwischen Deckschicht und PU-Hartschaumstoff entstehen.

Die Aufgabe konnte überraschenderweise dadurch gelöst werden, daß die Komponente b) mindestens eine Verbindung der allgemeinen Formel I 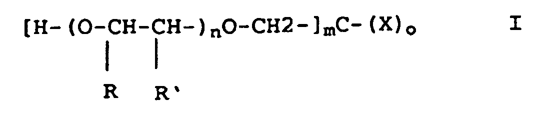 in der
R - Methyl-, Ethyl-, C₃- bis C₆-Alkyl, Wasserstoff
R' - Methyl-, Ethyl-, C₃- bis C₆-Alkyl, Benzyl, Wasserstoff
n - 0 bis 4,
m - 1 bis 3,
o - 1 bis 3
X - n-, iso-, neo- oder cyclo-Alkyl, Aralkyl, Benzyl, Aryl bedeuten und
m + o gleich 4 ist,
enthält, und als Treibmittel Cyclopentan oder eine Mischung aus Cyclopentan und mindestens einer niedrigsiedenden, mit Cyclopentan homogen mischbare Verbindung eingesetzt wird.

Gegenstand der Erfindung ist somit ein Verfahren zur Herstellung von Polyurethan-Hartschaumstoffen mit geringer Wärmeleitfähigkeit durch Umsetzung von
a) organischen und/oder modifizierten organischen Polyisocyanaten mit
b) mindestens einer Verbindung mit mindestens zwei reaktiven Wasserstoffatomen und und einem Molekulargewicht größer 400 g/mol, gegebenenfalls
c) H-funktionellen Kettenverlängerungs- und/oder Vernetzungsmitteln mit Molekulargewichten kleiner 400 g/mol
in Gegenwart von
d) Treibmitteln,
e) Katalysatoren und gegebenenfalls
f) Zusatzstoffen,
das dadurch gekennzeichnet ist, daß mindestens eine der Komponenten b) oder c) mindestens eine Verbindung der allgemeinen Formel I 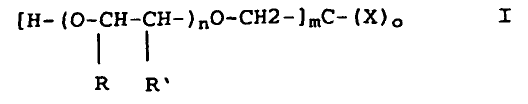 in der
R - Methyl-, Ethyl-, C₃- bis C₆-Alkyl, Wasserstoff
R' - Methyl-, Ethyl-, C₃- bis C₆-Alkyl, Benzyl, Wasserstoff
n - 0 bis 4,
m - 1 bis 3,
o - 1 bis 3
X - n-, iso-, neo- oder cyclo-Alkyl, Aralkyl, Benzyl, Aryl bedeuten und
m + o gleich 4 ist,
enthält, und als Treibmittel a) Cyclopentan oder eine Mischung aus Cyclopentan und mindestens einer niedrigsiedenden, mit Cyclopentan homogen mischbaren Verbindung eingesetzt wird.

Das Polyol der allgemeinen Formel I hat vorzugsweise eine Hydroxylzahl im Bereich von 300 bis 1300 mgKOH/g, insbesondere 500 bis 1100 mgKOH/g.

Bevorzugte Beispiele für Verbindung der allgemeinen Formel I sind Trimethylolpropan, Trimethylol-ethan, sowie deren Umsetzungsprodukte mit niederen Alkylenoxiden, insbesondere Ethylenoxid und/oder Propylenoxid mit einer Hydroxylzahl im Bereich von 700 mgKOH/g bis 2000 mgKOH/g, insbesondere 700 mgKOH/g bis 1500 mgKOH/g, besonders bevorzugt von 750 mgKOH/g bis 1200 mgKOH/g.

Der Einsatz der Verbindungen der allgemeinen Formel I erfolgt vorzugsweise in einer Menge von 3 bis 50 Gew-%, bezogen auf die Summe der Komponenten b), c), e) und f).

Die erfindungsgemäß eingesetzten Verbindungen der allgemeinen Formel I sind sehr gut mit den üblichen Bestandteilen der Polyolkomponente für PU-Hartschaum mischbar.

Nach einer bevorzugten Ausführungsform werden die Komponenten a), b) und gegebenenfalls c) so ausgewählt, daß der PU-Hartschaumstoff einen Gehalt an aromatischen Resten von mindestens 32 Masse-%aufweist. Der Gehalt an aromatischen Resten von mindestens 32 Masse-% im PU-Hart-schaumstoff kann auch ausschließlich aus den aromatischen Polyisocyanaten (a) oder ausschließlich aus den Verbindungen (b) und/oder niedermolekularen Kettenverlängerungs- und/oder Vernetzungsmitteln resultieren.

Durch das erfindungsgemäße Verfahren kann die Wärmeleitfähigkeit der PU-Hartschaumstoffe auf Werte unterhalb von 18 mW/mK reduziert werden.

Zur Herstellung der PU-Hartschaumstoffe nach dem erfindungsgemäßen Verfahren können die an sich bekannten Aufbaukomponenten Verwendung finden, wobei solche mit einem hohen Gehalt an aromatischen Gruppen bevorzugt sind. Durch die Erhöhung des Gehaltes an aromatischen Aufbaukomponenten wird das mechanische Eigenschaftsniveau und deren Brandverhalten verbessert.

Im einzelnen möchten wir zu den Aufbaukomponenten folgendes ausführen:
a) Als organische Polyisocyanate kommen die an sich bekannten aliphatischen, cycloaliphatischen, araliphatischen und vorzugsweise aromatischen mehrwertigen Isocyanate in Betracht.

Im einzelnen seien beispielhaft genannt: Alkylendiisocyanate mit 4 bis 12 Kohlenstoffatomen im Alkylenrest, wie z.B. 1,12-Dodecandiisocyanat, 2-Ethyl-tetramethylen-diisocyanat-1,4, 2-Methyl-pentamethylen-diisocyanat-1,5, 2-Ethyl-2-butyl-pentamethylen-diisocyanat-1,5, Tetramethylen-diisocyanat-1,4 und vorzugsweise Hexamethylen-diisocyanat-1,6; cycloaliphatische Diisocyanate, wie z.B. Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, araliphatische Diisocyanate, wie z.B. 1,4-Xylylen-diisocyanat und Xylylen-diisocyanat-Isomerengemische und vorzugsweise aromatische Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylen-diisocyanaten. Die organischen Di- und Polyisocyanate können einzeln oder in Form von Mischungen eingesetzt werden.

Die organischen Polyisocyanate können nach bekannten Verfahren hergestellt werden. Vorzugsweise werden sie hergestellt durch Phosgenierung der entsprechenden Polyamine zur Bildung von Polycarbaminsäurechloriden und deren thermische Spaltung bei erhöhten Temperaturen in das organische Polyisocyanat und Chlorwasserstoff oder nach phosgenfreien Verfahren, z.B. durch Umsetzung der entsprechenden Polyamine mit Harnstoff und Alkohol zu Polycarbaminsäureestern und deren thermische Spaltung bei erhöhten Temperaturen in das Polyisocyanat und Alkohol.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Uretonimin-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000 modifiziertes 4,4'-Diphenylmethan-diisocyanat, modifizierte 4,4'- und 2,4'-Diphenylmethan-diisocyanatmischungen, oder modifiziertes Roh-MDI oder 2,4- bzw. 2,6-Toluylen-diisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylen-polyoxyethylen-glykole, -triole und/oder - tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus den nachfolgend beschriebenen Polyester- und/oder vorzugsweise Polyether-polyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige Carbodiimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.

Die modifizierten Polyisocyanate können miteinander oder mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat gegebenenfalls gemischt werden.

Besonders bewährt haben sich als organische Polyisocyanate und kommen vorzugsweise zur Anwendung zur Herstellung der PU-Hartschaumstoffe: Mischungen aus modifizierten Urethangruppen enthaltenden organischen Polyisocyanaten mit einem NCO-Gehalt von 33,6 bis 15 Gew.-%, insbesondere solchen auf Basis von Toluylendiisocyanaten, 4,4'-Diphenylmethan-diisocyanat, Diphenylmethandiisocyanat-Isomerengemischen oder Roh-MDI und insbesondere 4,4'-, 2,4'- und 2,2'-Diphenylmethan-diisocyanat, Polyphenyl-polymethylen-polyisocyanat, 2,4- und 2,6-Toluylen-diisocyanat, Roh-MDI mit einem Gehalt an Isomeren des Diphenylmethandiisocyanats von 30 bis 80 Gew.-%, vorzugsweise von 35 bis 45 Gew.-% und Mischungen aus mindestens zwei der genannten Polyisocyanate, z.B. Roh-MDI oder Mischungen aus Toluylendiisocyanaten und Roh-MDI.
b) Als Verbindungen mit mindestens zwei reaktiven Wasserstoffatomen (b) kommen vorzugsweise Polyhydroxylverbindungen mit einer Funktionalität von 2 bis 8, vorzugsweise 3 bis 8 und einem Molekulargewicht von 400 bis 6000, vorzugsweise 600 bis 3500, in Betracht.

Beispielhaft genannt seien Polythioether-polyole, Polyesteramide, hydroxylgruppenhaltige Polyacetale, hydroxylgruppenhaltige aliphatische Polycarbonate und vorzugsweise Polyester-polyole und Polyether-polyole. Anwendung finden auch Mischungen aus mindestens zwei der genannten Polyhydroxylverbindungen sowie mit Polyhydroxylverbindungen mit Hydroxylzahlen kleiner 100 mg KOH/g, sofern die Mischungen eine durchschnittliche Hydroxylzahl im vorgenannten Bereich aufweisen.

Geeignete Polyesterpolyole können beispielsweise aus organischen Dicarbonsäuren mit 2 bis 12 Kohlenstoffatomen, vorzugsweise aromatischen Dicarbonsäuren mit 8 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen und Adipinsäure und insbesondere Mischungen aus Phthalsäure und/oder Phthalsäureanhydrid und Adipinsäure, Mischungen aus Phthalsäure(anhydrid), Isophthalsäure und Adipinsäure oder Dicarbonsäuregemische aus Bernstein-, Glutar- und Adipinsäure und Mischungen aus Terephthalsäure und Adipinsäure oder Dicarbonsäuregemische aus Bernstein-, Glutar- und Adipinsäure. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. E-Caprolacton oder Hydroxycarbonsäuren, z.B. W-Hydroxycapronsäure und Hydroxybenzoesäuren.

Zur Herstellung der Polyesterpolyole können die organischen, z.B. aliphatischen und vorzugsweise aromatischen und Mischungen aus aromatischen und aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgasen, wie z.B. Stickstoff, Kohlenmonoxid, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Zur Herstellung der Polyesterpolyole werden die organischen Polycarbonsäuren und/oder - derivate und mehrwertigen Alkohole vorteilhafterweise im Molverhältnis von 1:1 bis 1,8, vorzugsweise 1:1,05 bis 1,2 polykondensiert.

Insbesondere als Polyhydroxylverbindungen verwendet werden jedoch Polyetherpolyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 8, vorzugsweise 3 bis 8 reaktive Wasserstoffatome gebunden enthält, oder durch kationische Polymerisation mit LewisSäuren, wie Antimonpentachlorid, Bortrifluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie z.B. Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie z.B. gegebenenfalls mono- und dialkylsubstituiertes Ethylen-diamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Anilin, Phenylendiamine, 2,3-, 2,4-, 3,4- und 2,6-Toluylendiamin und 4,4'-, 2,4'- und 2,2'-Diamino-diphenylmethan.

Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin und Trialkanolamine wie z.B. Triethanolamin und Ammoniak und mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Pentaerythrit, Sorbit und Saccharose, mehrwertige Phenole, wie z.B. 4,4'-Dihydroxy-diphenylmethan und 4,4'-Dihydroxy-diphenylpropan-2,2. Resole, wie z.B. oligomere Kondensationsprodukte aus Phenol und Formaldehyd und Mannich-Kondensate aus Phenolen, Formaldehyd und Dialkanolaminen sowie Melamin.

Die Polyetherpolyole besitzen eine Funktionalität von vorzugsweise 3 bis 8 und insbesondere 3 und 6 und Hydroxylzahlen von vorzugsweise 120 mgKOH/g bis 770 mgKOH/g und insbesondere 240 mgKOH/g bis 570 mgKOH/g.

Als Polyetherpolyole eignen sich ferner Melamin-Polyether-polyol-Dispersionen gemäß EP-A-23 987 (US-A-4 293 657), Polymer-Polyetherpolyol-Dispersionen, hergestellt aus Polyepoxiden und Epoxidharzhärtern in Gegenwart von Polyether-polyolen gemäß DE 29 43 689 (US 43 05 861), Dispersionen von aromatischen Polyestern in Polyhydroxylverbindungen gemäß EP-A-62 204 (US-A-44 35 537) oder DE-A 33 00 474, Dispersionen von organischen und/oder anorganischen Füllstoffen in Polyhydroxylverbindungen gemäß EP-A-11 751 (US 42 43 755), Polyharnstoff-Polyether-polyol-Dispersionen gemäß DE-A-31 25 402, Tris-(hydroxyalkyl)isocyanurat-Polyether-polyol-Dispersionen gemäß EP-A-136 571 (US 4 514 526) und Kristallitsuspensionen gemäß DE-A-33 42 176 und DE-A-33 42 177 (US 45 60 708), wobei die Ausführungen in den genannten Patentveröffentlichungen als Bestandteil der Patentbeschreibung zu betrachten sind.

Die Polyetherpolyole können ebenso wie die Polyesterpolyole einzeln oder in Form von Mischungen verwendet werden. Ferner können sie mit den Pfropf-polyether-polyolen oder Polyesterpolyolen sowie den hydroxylgruppenhaltigen Polyesteramiden, Polyacetalen, Polycarbonaten und/oder phenolischen Polyolen gemischt werden.

Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen die an sich bekannter Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Als Verbindungen (b) eignen sich ferner phenolische und halogenierte phenolische Polyole, wie z.B. Benzylethergruppen aufweisende Resolpolyole. Resolpolyole dieser Art können beispielsweise hergestellt werden aus Phenol, Formaldehyd, zweckmäßigerweise Paraformaldehyd und mehrwertigen aliphatischen Alkoholen und werden z.B. beschrieben in den EP-A-0 116 308 und EP-A-0 116 310.

Als Verbindungen (b) insbesondere verwendet werden Akoxylierungsprodukte von Saccharose, Sorbit, Toluylendiamin, Dipheylmethandiamin, Alkoxylierungsprodukte von Mannich-Kondensaten sowie Mischungen der genannten Verbindungen.
c) Die PU-Hartschaumstoffe können ohne oder unter Mitverwendung von Kettenverlängerungs- und/oder Vernetzungsmitteln hergestellt werden. Zur Modifizierung der mechanischen Eigenschaften kann sich jedoch der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300. In Betracht kommen als Alkanolamine z.B. Ethanolamin und/oder Isopropanolamin, Dialkanolamine wie z.B. Diethanolamin, N-Methyl-, N-Ethyldiethanolamin, Diisopropanolamin, Trialkanolamine wie z.B. Triethanolamin, Triisopropanolamin und die Additionsprodukte aus Ethylenoxid oder 1,2-Propylenoxid und Alkylendiaminen mit 2 bis 6 C-Atomen im Alkylenrest wie z.B. N,N,N',N'-Tetra(2-hydroxyethyl)ethylendiamin und N,N,N',N'-Tetra(2-hydroxypropyl)ethylendiamin, aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxy-cyclohexan, Glycerin und niedermolekulare hydroxylgruppenhaltige Polyalkylenoxide auf Basis Ethylen- und/oder 1,2-Propylenoxid und aromatischen Diaminen, wie z.B. Toluylen-diaminen und/oder Diamino-diphenylmethanen sowie den vorgenannten Alkanolaminen, Diolen und/oder Triolen als Startermoleküle.
   Sofern zur Herstellung der PU-Hartschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise 2 bis 5 Gew.-%, bezogen auf das Gewicht der Polyhydroxylverbindung b), zum Einsatz.
d) Als Treibmittel zur Herstellung der PU-Hartschaumstoffe findet Cyclopentan (d1) Verwendung. Sehr gut bewährt haben sich jedoch auch Mischungen (d2), die enthalten
   (d2i) Cyclopentan oder eine Mischung aus den genannten Cycloalkanen und
   (d2ii) mindestens eine niedrigsiedende, mit Cyclopentan und/oder Cyclohexan homogen mischbare Verbindung, vorzugsweise einer Verbindung mit einem Siedepunkt unter 110°C, besonders bevorzugt unter 80°C.
      Die als Treibmittel geeigneten Verbindungen der genannten Art können ausgewählt werden aus der Gruppe der Alkane, Cycloalkane mit maximal 4 Kohlenstoffatomen, Dialkylether, Cycloalkylenether und Fluoralkane. Verwendbar sind auch Mischungen aus mindestens zwei Verbindungen der genannten Verbindungsgruppen. Beispielhaft genannt seien im einzelnen: Alkane, wie z.B. Propan, n-Butan, Isobutan, n- und iso-Pentan sowie technische Pentangemische, Cycloalkane, wie z.B. Cyclobutan, Dialkylether, wie z.B. Dimethylether, Methylethylether, Methylbutylether oder Diethylether, Cycloalkylenether wie z.B. Furan, niedere Ester, wie Ameisensäuremethylester, und Fluoralkane, die in der Troposphäre abgebaut werden und deshalb für die Ozonschicht unschädlich sind, wie z.B. Trifluormethan, Difluormethan, 1,1,1,3,3-Pentafluorbutan, 1,1,1,3,3-Pentafluorpropan, 1,1,1,2-Tetrafluorethan, Difluorethan, Tetrafluorethan und Heptafluorpropan.
      Die bevorzugt verwendeten Treibmittel können alleine oder vorzugsweise in Verbindung mit Wasser verwendet werden, wobei sich folgende Kombinationen vorzüglich bewährt haben, so daß sie zweckmäßigerweise eingesetzt werden: Wasser und Cyclopentan, Wasser und Cyclopentan und mindestens eine Verbindung aus der Gruppe n-Butan, Isobutan, n- und iso-Pentan, technische Pentangemische, Cyclobutan, Methylbutylether, Diethylether, Furan, Trifluormethan, Difluormethan, Difluorethan, 1,1,1,3,3-Pentafluorbutan, 1,1,1,3,3-Pentafluorpropan, 1,1,1,2-Tetrafluorethan, Tetrafluorethan und Heptafluorpropan. Die in Kombination mit Cyclopentan eingesetzte Menge an niedrigsiedenden, mit Cyclopentan homogen mischbaren Verbindungen wird so bemessen, daß die erhaltene Mischung vorteilhafterweise einen Siedepunkt von unter 50°C, vorzugsweise von 30 bis 0°C besitzt. Die hierfür erforderliche Menge ist abhängig von dem Verlauf der Siedepunktskurven der Mischung und kann nach bekannten Methoden experimentell ermittelt werden. PU-Hartschaumstoffe mit geringer Leitfähigkeit werden insbesondere dann erhalten, wenn als Treibmittel (d) pro 100 Gew.-Teile der Aufbaukomponente (b) verwendet werden:
d1) 3 bis 22 Gew.-Teile, vorzugsweise 5 bis 18 Gew.-Teile und insbesondere 8 bis 14 Gew.-Teile Cyclopentan und 0 bis 7 Gew.-Teile, vorzugsweise 1,0 bis 5,0 Gew.-Teile und insbesondere 2,2 bis 4,5 Gew.-Teile Wasser oder
   d2i) 2 bis 22 Gew.-Teile, vorzugsweise 5 bis 19 Gew.-Teile und insbesondere 9 bis 19 Gew.-Teile Cyclopentan,
   d2ii) 0,1 bis 18 Gew.-Teile, vorzugsweise 0,5 bis 10 Gew.-Teile und insbesondere 1,0 bis 6,0 Gew.-Teile mindestens einer mit Cyclopentan homogen mischbaren Verbindung mit einem Siedepunkt unter 110°C, besonders bevorzugt unter 80°C, ausgewählt aus der Gruppe Alkane, Cycloalkane mit maximal 4 C-Atomen, vorzugsweise Butan, n- und/oder iso-Pentan oder Mischungen daraus, besonders bevorzugt Mischungen aus n- und/oder iso-Pentan, Dialkylether, Cycloalkylenether und vorzugsweise Fluoralkane und 0 bis 7 Gew.-Teile, vorzugsweise 1,0 bis 5,0 Gew.-Teile und insbesondere 2,2 bis 4,5 Gew.-Teile Wasser.

   Zur Herstellung der PU-Hartschaumstoffe wird das Cyclopentan (d1) oder die Treibmittelmischung (d2) vorzugsweise in Verbindung mit Wasser nach an sich bekannten Methoden mindestens einer Aufbaukomponente (a) bis (c) zur Herstellung des PU-Hartschaumstoffs, gegebenenfalls unter Druck, einverleibt oder es wird direkt der Reaktionsmischung, zweckmäßigerweise mittels einer geeigneten Mischvorrichtung, zugeführt.
   Treibmittel der genannten Art werden beschrieben z.B. in der EP-A-0 421 269 (US-A-5,096,933) beschrieben.
e) Als Katalysatoren (e) werden insbesondere Verbindungen verwendet, die Reaktion der Hydroxylgruppen enthaltenden Verbindungen der Komponenten (b) und gegebenenfalls (c) mit den Polyisocyanaten stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinnmaleat und Dioctylzinndiacetat. Die organischen Metallverbindungen werden allein oder vorzugsweise in Kombination mit stark basischen Aminen eingesetzt. Genannt seien beispielsweise Amidine, wie 1,8-Diaza-bicyclo(5.4.0)-undecen-7, 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethyl-ethylen-diamin, N,N,N',N'-Tetramethyl-butandiamin oder -hexandiamin, Pentamethyldiethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin.
   Als Katalysatoren kommen ferner in Betracht: Tris-(dialkylaminoalkyl)-s-hexahydrotriazine, insbesondere 1,3,5-Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate und Trialkylammoniumcarboxylaten, wie Trialkylammoniumacetat, wie Natriummethylat, Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2,5 Gew.-% Katalysator bzw. Katalysatorkombination bezogen auf das Gewicht der Komponente (b).
f) Der Reaktionsmischung zur Herstellung der PU-Hartschaumstoffe können gegebenenfalls auch noch Zusatzstoffe (f) einverleibt werden. Genannt seien beispielsweise oberflächenaktive Substanzen, Schaumstabilisatoren, Zellregler, Füllstoffe, Farbstoffe, Pigmente, Flammschutzmittel, Antistatika, Hydrolyseschutzmittel, fungistatisch und bakteriostatisch wirkende Substanzen.
   Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Hartschaumstoffes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.
   Als Füllstoffe, insbesondere verstärkend wirkende Füllstoffe, sind die an sich bekannten, üblichen organischen und anorganischen Füllstoffe, Verstärkungsmittel und Beschwerungsmittel zu verstehen. Im einzelnen seien beispielhaft genannt: anorganische Füllstoffe wie z.B. silikatische Mineralien, beispielsweise Schichtsilikate wie Antigorit, Serpentin, Hornblenden, Amphibole, Chrisotil, Talkum; Metalloxide, wie Kaolin, Aluminiumoxide, Aluminiumsilikat, Titanoxid und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.
   Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (c), einverleibt.
   Geeignete Flammschutzmittel sind beispielsweise Trikresylphosphat, Tris-(2-chlorethyl)phosphat, Tris-(2-chlorpropyl)phosphat, Tris(1,3-dichlorpropyl)phosphat, Tris-(2,3-dibrompropyl)phosphat und Tetrakis-(2-chlorethyl)-ethylendiphosphat.
   Außer den bereits genannten halogensubstituierten Phosphaten können auch anorganische Flammschutzmittel, wie roter Phosphor, roten Phosphor enthaltende Zurichtungen, Aluminiumoxidhydrat, Antimontrioxid, Arsenoxid, Ammoniumpolyphosphat und Calciumsulfat oder Cyanursäurederivate, wie z.B. Melamin oder Mischungen aus mindestens zwei Flammschutzmitteln, wie z.B. Ammoniumpolyphosphaten und Melamin sowie gegebenenfalls Stärke zum Flammfestmachen der erfindungsgemäß hergestellten PU-Hartschaumstoffe verwendet werden. Im allgemeinen hat es sich als zweckmäßig erwiesen, 5 bis 50 Gew.-Teile, vorzugsweise 5 bis 25 Gew.-Teile der genannten Flammschutzmittel oder -mischungen für jeweils 100 Gew.-Teile der Komponenten (a) bis (c) zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1., 2. und 3. Auflage, 1966, 1983 und 1993, zu entnehmen.

Zur Herstellung der PU-Hartschaumstoffe werden die organischen, gegebenenfalls modifizierten Polyisocyanate (a), die höhermolekularen Verbindungen mit mindestens zwei reaktiven Wasserstoffatomen (b) und gegebenenfalls Kettenverlängerungsmittel und/oder Vernetzungsmittel (c) in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und gegebenenfalls (c) 0,85 bis 1,80:1, vorzugsweise 0,95 bis 1,35:1 und insbesondere ungefähr 1,0 bis 1,15:1, beträgt. Sofern die Urethangruppen enthaltende Schaumstoffe durch die Bildung von Isocyanuratgruppen modifiziert werden, beispielsweise zur Erhöhung der Flammwidrigkeit, wird üblicherweise ein Verhältnis von NCO-Gruppen der Polyisocyanate (a) zur Summe der reaktiven Wasserstoffatome der Komponente (b) und gegebenenfalls (c) von 1,8 bis 10:1, vorzugsweise 2,0 bis 6:1 angewandt.

Die PU-Hartschaumstoffe können diskontinuierlich oder kontinuierlich nach dem Prepolymer- oder vorzugsweise nach dem one shot-Verfahren mit Hilfe bekannter Mischvorrichtungen hergestellt werden.

Als besonders vorteilhaft hat es sich erwiesen, nach dem Zweikomponenten-Verfahren zu arbeiten und die Aufbaukomponente (b), (d), (e) und gegebenenfalls (c) und (f) in der Komponente (A) zu vereinigen und als Komponente (B) die organischen Polyisocyanate, modifizierten Polyisocyanate (a) oder Mischungen aus den genannten Polyisocyanaten und gegebenenfalls Treibmittel (d) zu verwenden.

Die Ausgangskomponenten werden bei einer Temperatur von 15 bis 90°C, vorzugsweise von 20 bis 35°C gemischt und in ein offenes, gegebenenfalls temperiertes Formwerkzeug eingebracht, in der man die Reaktionsmischung zur Vermeidung einer verdichteten Randzone im wesentlichen druckfrei aufschäumen läßt. Zur Bildung von Verbundelementen beschichtet man zweckmäßigerweise die Rückseite einer Deckschicht, z.B. durch Begießen oder Besprühen, mit der schaumfähigen Reaktionsmischung und läßt diese aufschäumen und zum PU-Hartschaumstoff aushärten.

Die nach dem erfindungsgemäßen Verfahren hergestellten PU-Hartschaumstoffe besitzen vorzugsweise Dichten von 20 bis 50 g/l und eine Wärmeleitfähigkeit üblicherweise von kleiner 0,018, beispielsweise von 0,018 bis 0,016 W/m·K und weniger.

Die PU-Hartschaumstoffe finden vorzugsweise Verwendung als wärmedämmende Zwischenschicht in Verbundelementen und zum Ausschäumen von Hohlräumen in Kühlmöbelgehäusen, insbesondere für Kühlschränke und Gefriertruhen, und als Außenmantel von Heißwasserspeichern. Die Produkte eignen sich ferner zur Isolierung von erwärmten Materialien, als Motorabdeckung und als Rohrschalen.

### Beispiele

### Herstellung der PU-Hartschaumstoffe

### Vergleichsbeispiel I

A-Komponente: Mischung, die bestand aus
   - 63,5: Gew.-Teilen eines Polyether-polyols der Hydroxylzahl 440, hergestellt durch anionische Polyaddition von 1,2-Propylenoxid an Saccharose,
   - 15,0: Gew.-Teilen eines Polyether-polyols der Hydroxylzahl 400, hergestellt durch anionische Polyaddition von 1,2-Propylenoxid an Sorbit,
   - 10,0: Gew.-Teilen eines Polyether-polyols der Hydroxylzahl 120, hergestellt durch anionische Polyaddition von 1,2-Propylenoxid an N-(3-Dimethylaminopropyl)ethylendiamin und anschließende anionische Polyaddition von Ethylenoxid an das erhaltene N-(3-Dimethylaminopropyl)-ethylendiamin-1,2-Propylenoxid-Addukt,
   - 5,0: Gew.-Teilen Polyoxypropylen-glykol der Hydroxylzahl 250,
   - 1,5: Gew.-Teilen eines Schaumstabilisators auf Silikonbasis (Tegostab® B 8462 der Goldschmidt AG, Essen),
   - 2,2: Gew.-Teilen N,N-Dimethylcyclohexylamin,
   - 0,5: Gew.-Teilen einer 47 gew.-%igen Lösung von Kaliumacetat in Ethylen-glykol,
   - 2,0: Gew.-Teilen Wasser und
   - 11,0: Gew.-Teilen Cyclopentan.
Komponente B:
   Mischung aus Diphenylmethandiisocyanaten und Polyphenyl-polymethylen-polyisocyanaten (Roh-MDI) mit einem NCO-Gehalt von 31,5 Masse-% und einem Gehalt an aromatischen Resten von ca. 56 Masse-%.
   - 100: Gew.-Teile der A-Komponente und
   - 125: Gew.-Teile der B-Komponente wurden in einem Hochdruck-Puromat® PU 15 gemischt und die Reaktionsmischung in eine Bosch-Lanze eingespritzt. Man erhielt einen gleichförmigen PU-Hartschaumstoff mit einem Raumgewicht von ca. 38 g/l und einer Wärmeleitfähigkeit von 20,5 mW/mK, gemessen bei 23°C. Der Gehalt an aromatischen Resten in den Aufbaukomponenten (a) bis (c) betrug 31 Masse-%.

### Vergleichsbeispiel II

A-Komponente: Mischung, die bestand aus
   - 55,9: Gew.-Teilen eines Polyether-polyols mit der Hydroxylzahl von 370 und einem Gehalt an aromatischen Resten von 19,3 Gew.-%, hergestellt durch anionische Polykondensation von 1,2-Propylenoxid an eine Mischung aus Diamino-diphenylmethan-Isomeren und Polyphenyl-polymethylen-polyaminen,
   - 37,0: Gew.-Teilen eines Polyether-polyols mit der Hydroxylzahl von 340, hergestellt durch anionische Polyaddition von 1,2-Propylenoxid an Sorbit,
   - 3,0: Gew.-Teilen eines Schaumstabilisators auf Silikonbasis (Tegostab® B 8465 der Goldschmidt AG, Essen),
   - 1, 3: Gew.-Teilen N,N-Dimethylcyclohexylamin,
   - 0,7: Gew.-Teilen N,N,N',N",N" -Pentamethyl-diethylentriamin,
   - 0,3: Gew.-Teilen Dikaliumhydrogenphosphat,
   - 1,8: Gew.-Teilen Wasser und
   - 13,0: Gew.-Teilen Cyclopentan.
B-Komponente: analog Vergleichsbeispiel I
   - 100: Gew.-Teile der A-Komponente und
   - 110: Gew.-Teile der B-Komponente wurden in einem Hochdruck-Puromat® PU 15 gemischt und die Reaktionsmischung in eine Bosch-Lanze eingespritzt. Man erhielt einen gleichmäßigen PU-Hartschaumstoff mit einem Raumgewicht von ca. 36 g/l und einer Wärmeleitfähigkeit von 20,0 mW/mK, gemessen bei 23°C. Der Gehalt an aromatischen Resten in den Aufbaukomponenten (a) bis (c) betrug 34,5 Masse-%.

### Vergleichsbeispiel III

A-Komponente: Mischung, die bestand aus
   - 30,0: Gew.-Teilen eines Polyether-polyols mit der Hydroxylzahl von 350 und einem Gehalt an aromatischen Resten von 11,4 Gew.-%, hergestellt durch Blockcopolyaddition von 1,2-Propylenoxid (50 Gew.-%) und Ethylenoxid (50 Gew.-%) an eine Toluylendiamin-Isomerenmischung als Startermoleküle,
   - 23,7: Gew.-Teilen eines Polyether-polyols der Hydroxylzahl 440, hergestellt durch anionische Polyaddition von 1,2-Propylenoxid an Saccharose,
   - 20,0: Gew.-Teilen eines Polyether-polyols der Hydroxylzahl 550 und mit einem Gehalt an aromatischen Resten von ca. 11 Masse-%, hergestellt durch anionische Polyaddition von 1,2-Propylenoxid an ein Mannich-Kondensat, erhältlich aus 4,4'-Dihydroxydiphenylpropan-2,2, Formaldehyd und Diethanolamin, als Startermolekül,
   - 20,0: Gew.-Teilen eines Polyether-polyols der Hydroxylzahl 120, hergestellt durch anionische Polyaddition von 1,2-Propylenoxid an N-(3-Dimethylaminopropyl)ethylendiamin und anschließende anionische Polyaddition von Ethylenoxid an das erhaltene N-(3-Dimethylaminopropyl)-ethylendiamin-1,2-Propylenoxid-Addukt,
   - 3,0: Gew.-Teilen eines Schaumstabilisators auf Silikonbasis (Tegostab® B 8465 der Goldschmidt AG, Essen)
   - 1,0: Gew.-Teilen N,N-Dimethylcyclohexylamin,
   - 0,5: Gew.-Teilen N,N,N',N",N"-Pentamethyl-diethylentriamin,
   - 1,8: Gew.-Teilen Wasser und
   - 13,0: Gew.-Teilen Cyclopentan.
B-Komponente: analog Vergleichsbeispiel I
   - 100: Gew.-Teile der A-Komponente und
   - 123: Gew.-Teile der B-Komponente wurden in einem Hochdruck-Puromat® PU 15 gemischt und die Reaktionsmischung in eine Bosch-Lanze eingespritzt. Man erhielt einen gleichmäßigen PU-Hartschaumstoff mit einem Raumgewicht von ca. 35 g/l und einer Wärmeleitfähigkeit von 19,5 mW/mK, gemessen bei 23°C. Der Gehalt an aromatischen Resten in den Aufbaukomponenten (a) bis (c) betrug 33,4 Masse-%.

### Vergleichsbeispiel IV

A-Komponente: Mischung, die bestand aus
   - 20,0: Gew.-Teilen eines Polyester-polyols mit einer Hydroxylzahl von 240 und einem Gehalt an aromatischen Resten von ca. 25 Masse-%, hergestellt durch Polykondensation von Phthalsäureanhydrid, Ethylenglykol und Diethylenglykol im Masseverhältnis 43:5:52.
   - 43,6: Gew.-Teilen eines Polyether-polyols der Hydroxylzahl 490, hergestellt durch anionische Polyaddition von 1,2-Propylenoxid an Saccharose,
   - 20,0: Gew.-Teilen eines Polyether-polyols der Hydroxylzahl 570 und mit einem Gehalt an aromatischen Resten von ca. 11,4 Masse-%, hergestellt durch anionische Polyaddition von 1,2-Propylenoxid an ein Mannich-Kondensat, erhältlich aus 4,4'-Dihydroxydiphenylpropan-2,2, Formaldehyd und Diethanolamin, als Startermolekül,
   - 10,0: Gew.-Teilen eines Polyether-polyols der Hydroxylzahl 770, hergestellt durch anionische Polyaddition von 1,2-Propylenoxid an Ethylen-diamin als Startermolekül,
   - 2,5: Gew.-Teilen eines Schaumstabilisators auf Silikonbasis (Tegostab® B 8465 der Goldschmidt AG, Essen),
   - 1,4: Gew.-Teilen N,N-Dimethylcyclohexylamin,
   - 0,7: Gew.-Teilen 2,2'-Bis(dimethylamino)-diethylether,
   - 1,8: Gew.-Teilen Wasser und
   - 13,0: Gew.-Teilen Cyclopentan.
B-Komponente: analog Vergleichsbeispiel I
   - 100: Gew.-Teile der A-Komponente und
   - 130: Gew.-Teile der B-Komponente wurden in einem Hochdruck-Puromat® PU 15 gemischt und die Reaktionsmischung in eine Bosch-Lanze eingespritzt. Man erhielt einen gleichmäßigen PU-Hartschaumstoff mit einem Raumgewicht von ca. 37 g/l und einer Wärmeleitfähigkeit von 18,9 mW/mK, gemessen bei 23°C. Der Gehalt an aromatischen Resten in den Aufbaukomponenten (a) bis (c) betrug 34,8 Masse-%.

### Beispiel 1

A-Komponente: Mischung, die bestand aus
   - 73,5: Gew.-Teilen eines Polyetherpolyols der Hydroxylzahl 390und einem Gehalt an aromatischen Resten von 11,5 Gew.-%, hergestellt durch Blockcopolyaddition von 50 Gew.-%. 1,2-Propylenoxid und 50 Gew.-%. Ethylenoxid an eine Toluylendiamin-Isomerenmischung als Startmolekül,
   - 20,0: Gew.-Teilen eines Polyetherpolyols der Hydroxylzahl 850, hergestellt durch anionische Polyaddition von 1,2-Propylenoxid an 1,1,1,-Trimethylolpropan
   - 2,0: Gew.-Teilen eines Schaumstabilisators auf Silikonbasis (Tegostab® B 8467 der Goldschmidt AG, Essen)
   - 1,3: Gew.-Teilen N,N-dimethylcyclohexylamin
   - 1,1: Gew-Teilen N,N,N',N",N"-Pentamethyl-diethylentriamin
   - 0,5: Gew.-Teilen einre 47.-%igen Lösung von Kaliumacetat in Ethylenglykol
   - 1,6: Gew.-Teilen Wasser
   - 17: Gew.-Teilen Cyclopentan
Komponente B: analog Vergleichsbeispiel I
   100 Gew.-Teile der Komponente A und 134 Gew.-Teile der Komponente B wurden in einer Hochdruck-Verschäummaschine des Typs Puromat® PU 15 gemischt und die Reaktionsmischung in eine Bosch-Lanze eingespritzt. Es wurde ein gleichmäßiger PU-Hartschaumstoff mit einem Raumgewicht von 36 g/l und einer Wärmeleitfähigkeit von 17,8 mW/mK, gemessen bei 23 °C, erhalten. Der Gehalt an aromatischen Resten in den Aufbaukomponenten a) bis c) betrug 35,3 Gew.-%

### Beispiel 2

A-Komponente: Mischung, bestehend aus
   - 65,5: Gew.-Teilen eines Polyetherpolyols der Hydroxylzahl 390und einem Gehalt an aromatischen Resten von 11,5 Gew.-%, hergestellt durch Blockcopolyaddition von 50 Gew.-%. 1,2-Propylenoxid und 50 Gew.-%. Ethylenoxid an eine Toluylendiamin-Isomerenmischung als Startmolekül,
   - 20,0: Gew.-Teilen eines Polyetherpolyols der Hydroxylzahl 950, hergestellt durch anionische Polyaddition von 1,2-Propylenoxid an 1,1,1,-Trimethylolpropan
   - 8,0: Gew.-Teilen eines Polyoxypropylenglykols der Hydroxylzahl 250
   - 2,0: Gew.-Teilen eines Schaumstabilisators auf Silikonbasis (Tegostab® B 8467 der Goldschmidt AG, Essen)
   - 1,3: Gew.-Teilen N,N-dimethylcyclohexylamin
   - 1,1: Gew-Teilen N,N,N',N",N"-Pentamethyl-diethylentriamin
   - 0,5: Gew.-Teilen einre 47.-%igen Lösung von Kaliumacetat in Ethylenglykol
   - 1,6: Gew.-Teilen Wasser
   - 17: Gew.-Teilen Cyclopentan
Komponente B: analog Vergleichsbeispiel I
   100 Gew.-Teile der Komponente A und 134 Gew.-Teile der Komponente B wurden in einer Hochdruck-Verschäummaschine des Typs Puromat® PU 15 gemischt und die Reaktionsmischung in eine Bosch-Lanze eingespritzt. Es wurde ein gleichmäßiger PU-Hartschaumstoff mit einem Raumgewicht von 36 g/l und einer Wärmeleitfähigkeit von 17,6 mW/mK, gemessen bei 23 °C, erhalten. Der Gehalt an aromatischen Resten in den Aufbaukomponenten a) bis c) betrug 34,8 Gew.-%.

### Beispiel 3

A-Komponente: Mischung, bestehend aus
   - 71,5: Gew.-Teilen eines Polyetherpolyols der Hydroxylzahl 280 und einem Gehalt an aromatischen Resten von 45,45 Gew.-%, hergestellt durch Polyaddition von 1,2-Propylenoxid an Bisphenol A als Startmolekül,
   - 20,0: Gew.-Teilen eines Polyetherpolyols der Hydroxylzahl 950, hergestellt durch anionische Polyaddition von Ethylenoxid an 1,1,1,-Trimethylolpropan
   - 3,0: Gew.-Teilen eines Schaumstabilisators auf Silikonbasis (Tegostab® B 8467 der Goldschmidt AG, Essen)
   - 1,7: Gew.-Teilen N,N-dimethylcyclohexylamin
   - 1,3: Gew.-Teilen Wasser
   - 17: Gew.-Teilen Cyclopentan
Komponente B: analog Vergleichsbeispiel I
   100 Gew.-Teile der Komponente A und 131 Gew.-Teile der Komponente B wurden in einer Hochdruck-Verschäummaschine des Typs Puromat® PU 15 gemischt und die Reaktionsmischung in eine Bosch-Lanze eingespritzt. Es wurde ein gleichmäßiger PU-Hartschaumstoff mit einem Raumgewicht von 36 g/l und einer Wärmeleitfähigkeit von 17,5 mW/mK, gemessen bei 23 °C, erhalten. Der Gehalt an aromatischen Resten in den Aufbaukomponenten a) bis c) betrug 43,2 Gew.-%.

### Beispiel 4

A-Komponente: Mischung, bestehend aus
   - 71,5: Gew.-Teile eines Polyester-Polyols der Hydroxylzahl 250, hergestellt durch Poly- kondensation von Phtalsäureanhydrid und Diethylenglykol mit einem Gehalt an aromatischen Resten von 25,0 Gew-%
   - 20,0: Gew.-Teilen eines Polyetherpolyols der Hydroxylzahl 950, hergestellt durch anionische Polyaddition von Ethylenoxid an 1,1,1,-Trimethylolpropan
   - 3,0: Gew.-Teilen eines Schaumstabilisators auf Silikonbasis (Tegostab® B 8467 der Goldschmidt AG, Essen)
   - 1,7: Gew.-Teilen N,N-dimethylcyclohexylamin
   - 1,5: Gew.-Teilen N,N,N',N",N"-Pentamethyl-diethylentriamin
   - 1,0: Gew.-Teilen einer 47%-igen Lösung von Kaliumacetat in Ethylenglykol
   - 1,3: Gew.-Teilen Wasser
   - 17: Gew.-Teilen Cyclopentan
Komponente B: analog Vergleichsbeispiel I
   100 Gew.-Teile der Komponente A und 125 Gew.-Teile der Komponente B wurden in einer Hochdruck-Verschäummaschine des Typs Puromat® PU 15 gemischt und die Reaktionsmischung in eine Bosch-Lanze eingespritzt. Es wurde ein gleichmäßiger PU-Hartschaumstoff mit einem Raumgewicht von 36 g/l und einer Wärmeleitfähigkeit von 17,6 mW/mK, gemessen bei 23 °C, erhalten. Der Gehalt an aromatischen Resten in den Aufbaukomponenten a) bis c) betrug 37,9 Gew.-%.

## Patentansprüche

1. Verfahren zur Herstellung von Polyurethan-Hartschaumstoffen mit geringer Wärmeleitfähigkeit durch Umsetzung von
a) organischen und/oder modifizierten organischen Polyisocyanaten mit
b) mindestens einer Verbindung mit mindestens zwei reaktiven Wasserstoffatomen und einem
Molekulargewicht größer 400 g/mol, gegebenenfalls
c) H-funktionellen niedermolekularen Kettenverlängerungs- und/oder Vernetzungsmitteln mit Molekulargewichten kleiner 400 g/mol
in Gegenwart von
d) Treibmitteln,
e) Katalysatoren und gegebenenfalls
f) Zusatzstoffen,
**dadurch gekennzeichnet, daß** mindestens eine der Komponenten b) oder c) mindestens eine Verbindung der allgemeinen Formel I 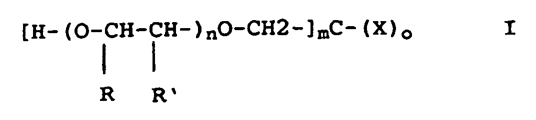 in der
R - Methyl-, Ethyl-, C₃- bis C₆-Alkyl, Wasserstoff
R' - Methyl-, Ethyl-, C₃- bis C₆-Alkyl, Benzyl, Wasserstoff
n - 0 bis 4,
m - 1 bis 3,
o - 1 bis 3
X - n-, iso-, neo- oder cyclo-Alkyl, Aralkyl, Benzyl, Aryl bedeuten und
m + o gleich 4 ist,
enthält, und als Treibmittel d) Cyclopentan oder eine Mischung aus Cyclopentan und mindestens einer niedrigsiedenden, mit Cyclopentan homogen mischbaren Verbindung eingesetzt wird.

2. Verfahren nach Anspruch 1, **dadurch gekennzeichnet, daß** als Verbindungen der allgemeinen Formel I Trimethylolpropan, Trimethylolethan sowie deren Umsetzungsprodukte mit Alkylenoxiden eingesetzt wird.

3. Verfahren nach Anspruch 1, **dadurch gekennzeichnet, daß** als Verbindungen der allgemeinen Formel I Umsetzungsprodukte aus Trimethylolpropan und/oder Trimethylolethan mit Alkylenoxiden mit einer Hydroxylzahl im Bereich von 700 mgKOH/g bis 2000 mgKOH/g eingesetzt werden.

4. Verfahren nach Anspruch 1, **dadurch gekennzeichnet, daß** die Verbindung der allgemeinen Formel I in einer Menge von 3 bis 50 Gew-%, bezogen auf die Summe der Komponenten b), c), e) und f), erfolgt.

5. Verfahren nach Anspruch 1, **dadurch gekennzeichnet, daß** die Komponenten a, b) und c) einen Gehalt an aromatischen Resten von mindestens 32 Gew.-%, bezogen auf das Gewicht des resultierenden PU-Hartschaumstoffes, enthalten.

6. Verfahren nach Anspruch 1, **dadurch gekennzeichnet, daß** man als organische Polyisocyanate (a) aromatische Polyisocyanate, ausgewählt aus der Gruppe 4,4'-, 2,4'- und 2,2' Diphenylmethandiisocyanat, Polyphenyl-polymethylen-polyisocyanate, 2,4- und 2,6-Toluylen-diisocyanat und Mischungen aus mindestens zwei der genannten Polyisocyanate verwendet.

7. Verfahren nach Anspruch 1, **dadurch gekennzeichnet, daß** man als organische Polyisocyanate (a) Mischungen aus Diphenylmethan-diisocyanaten und Polyphenyl-polymethylen-polyisocyanaten mit einem Diphenylmethan-diisocyanat-Isomerengehalt von 30 bis 80 Gew. -% verwendet.

8. Verfahren nach einem der Ansprüche 1 bis 3, **dadurch gekennzeichnet, daß** man als Verbindungen (b) Polyhydroxylverbindungen mit einer Funktionalität von 2 bis 8 und einem Molekulargewicht von 400 bis 6000 verwendet.

9. Verfahren nach Anspruch 8, **dadurch gekennzeichnet, daß** man als Verbindungen (b) Polyether-polyole mit einer Funktionalität von 2 bis 8 und einem Molekulargewicht von 400 bis 6000 verwendet, die hergestellt werden durch anionische Polyaddition von mindestens einem Alkylenoxid an mindestens eine, mindestens eine Hydroxyl-, Amino- und/oder Carboxylgruppen aufweisende aromatische Verbindungen mit mindestens 2 reaktiven Wasserstoffatomen als Startermolekül.

10. Verfahren nach Anspruch 8, **dadurch gekennzeichnet, daß** man als Verbindungen (b) Polyether-polyole mit einer Funktionalität von 2 bis 8 und einem Molekulargewicht von 400 bis 6000 verwendet, die hergestellt werden durch anionische Polyaddition von mindestens einem Alkylenoxid an mindestens ein aromatisches Startermolekül aus der Gruppe der aromatischen Polycarbonsäuren, aromatischen Hydroxycarbonsäuren und aromatischen Aminocarbonsäuren, der aromatischen Mono- und Polyamine, der Polyphenole und der Mannich-Kondensate aus Phenolen, Formaldehyd und Dialkanolaminen.

11. Verfahren nach Anspruch 10, **dadurch gekennzeichnet, daß** man als Startermoleküle aromatische Polyamine aus der Gruppe der 1,2-, 1,3- und 1,4-Phenylendiamine, 2,3-, 2,4-, 3,4- und 2,6-Toluylendiamine, 4,4'-, 2,4'- und 2,2'-Diamino-diphenylmethan, Polyphenyl-polymethylen-polyamine und Mischungen aus mindestens zwei der genannten Polyamine verwendet.

12. Verfahren nach einem der Ansprüche 5 bis 7, **dadurch gekennzeichnet, daß** man als Alkylenoxide 1,2-Propylenoxid und/oder Ethylenoxid verwendet.

13. Verfahren nach einem der Ansprüche 1 bis 8, **dadurch gekennzeichnet, daß** man als Treibmittel (d) in Verbindung mit Wasser Cyclopentan (d1) verwendet.

14. Verfahren nach einem der Ansprüche 1 bis 8, **dadurch gekennzeichnet, daß** man als Treibmittel (d) in Verbindung mit Wasser verwendet, (d2) Mischungen, enthaltend
(d2i) Cyclopentan, Cyclohexan oder ein Gemisch dieser Cycloalkane und
(d2ii) niedrigsiedende mit Cyclopentan und/oder Cyclohexan homogen mischbare Verbindungen.

15. Verfahren nach Anspruch 12, **dadurch gekennzeichnet, daß** als Verbindungen d2ii) n-Butan, iso-Butan, n-Pentan, iso-Pentan, Ameisensäuremethylester, 1,1,1,3,3-Pentafluorbutan, 1,1,1,3,3-Pentafluorpropan, 1,1,1,2-Tetrafluorethan oder Gemische aus diesen Verbindungen verwendet werden.

16. Verwendung von Polyurethan-Hartschaumstoffen, hergestellt nach dem Verfahren gemäß einem der Ansprüche 1 bis 10, als Zwischenschicht für Verbundelemente und zum Ausschäumen von Hohlräumen in Kühlmöbelgehäusen oder Heizungselementen.

17. Verwendung von Verbindungen der allgemeinen Formel I zur Herstellung von Polyurethan-Hartschäumen mit verringerter Wärmeleitfähigkeit.

## Claims

1. A process for producing rigid polyurethane foams having a low thermal conductivity by reacting
a) organic and/or modified organic polyisocyanates with
b) at least one compound containing at least two reactive hydrogen atoms and having a
molecular weight of greater than 400 g/mol, if appropriate
c) H-functional low molecular weight chain extenders and/or crosslinkers having molecular weights of less than 400 g/mol
in the presence of
d) blowing agents,
e) catalysts and, if appropriate
f) additives,
wherein at least one of the components b) and c) comprises at least one compound of the formula I 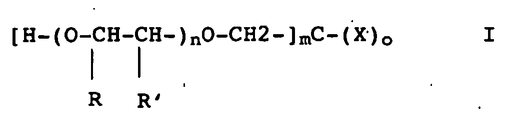 where
R is methyl, ethyl, C₃-C₆-alkyl, hydrogen,
R' is methyl, ethyl, C₃-C₆-alkyl, benzyl, hydrogen,
n is from 0 to 4,
m is from 1 to 3,
o is from 1 to 3,
X is n-, iso-, neo- or cyclo-alkyl, aralkyl, benzyl, aryl and
m + o = 4 and the blowing agent (d) used is cyclopentane or a mixture of cyclopentane and at least one low-boiling compound that can be mixed homogeneously with cyclopentane.

2. The process according to claim 1, wherein compounds of the formula I which are used are trimethylolpropane, trimethylolethane and/or their reaction products with alkylene oxides.

3. The process according to claim 1, wherein compounds of the formula I which are used are reaction products of trimethylolpropane and/or trimethylolethane with alkylene oxides and have a hydroxyl number in the range from 700 mg KOH/g to 2000 mg KOH/g.

4. The process according to claim 1, wherein the compound of the formula I is used in an amount of from 3 to 50% by weight, based on the sum of the components b), c), e) and f).

5. The process according to claim 1, wherein the components a), b) and c) have a content of aromatic radicals of at least 32% by weight, based on the weight of the resulting rigid PU foam.

6. The process according to claim 1, wherein organic polyisocyanates (a) used are
aromatic polyisocyanates selected from the group consisting of diphenylmethane 4,4'-, 2,4'- and 2,2'-diisocyanate, polyphenylpolymethylene polyisocyanates, tolylene 2,4- and 2,6-diisocyanate and
mixtures of at least two of the polyisocyanates mentioned.

7. The process according to claim 1, wherein organic polyisocyanates (a) used are mixtures of diphenylmethane diisocyanates and polyphenylpolymethylene polyisocyanates having a diphenylmethane diisocyanate isomer content of from 30 to 80% by weight.

8. The process according to any of claims 1 to 3, wherein compounds (b) used are polyhydroxyl compounds having a functionality of from 2 to 8 and a molecular weight of from 400 to 6000.

9. The process according to claim 8, wherein compounds (b) used are polyether polyols which have a functionality of from 2 to 8 and a molecular weight of from 400 to 6000 and are prepared by anionic polyaddition of at least one alkylene oxide onto at least one aromatic compound which contains at least one hydroxyl, amino and/or carboxyl group and at least two reactive hydrogen atoms as initiator molecule.

10. The process according to claim 8, wherein compounds (b) used are polyether polyols which have a functionality of from 2 to 8 and a molecular weight of from 400 to 6000 and are prepared by anionic polyaddition of at least one alkylene oxide onto at least one aromatic initiator molecule selected from the group consisting of aromatic polycarboxylic acids, aromatic hydroxycarboxylic acids and aromatic aminocarboxylic acids, aromatic monoamines and polyamines, polyphenols and Mannich condensates of phenols, formaldehyde and dialkanolamines.

11. The process according to claim 10, wherein initiator molecules used are aromatic polyamines selected from the group consisting of 1,2-, 1,3- and 1,4-phenylenediamines, 2,3-, 2,4-, 3,4- and 2,6-tolylenediamines, 4,4'-, 2,4'- and 2,2'-diaminodiphenylmethane, polyphenylpolymethylene polyamines and mixtures of at least two of the polyamines mentioned.

12. The process according to any of claims 5 to 7, wherein alkylene oxides used are 1,2-propylene oxide and/or ethylene oxide.

13. The process according to any of claims 1 to 8, wherein the blowing agent (d) used is water in combination with cyclopentane (d1).

14. The process according to any of claims 1 to 8, wherein the blowing agent (d) used is water in combination with (d2) mixtures comprising
(d2i) cyclopentane, cyclohexane or a mixture of these and
(d2ii) low-boiling compounds which are homogeneously miscible with cyclopentane and/or cyclohexane.

15. The process according to claim 12, wherein compounds d2ii) used are n-butane, iso-butane, n-pentane, iso-pentane, methyl formate, 1,1,1,3,3-pentafluorobutane, 1,1,1,3,3-pentafluoropropane, 1,1,1,2-tetrafluoroethane or mixtures of these.

16. The use of rigid polyurethane foams produced by the process according to any of claims 1 to 10 as intermediate layer of composite elements and for filling hollow spaces in refrigeration appliance housings or heating elements with foam.

17. The use of compounds of the formula I for producing rigid polyurethane foams having a reduced thermal conductivity.

## Revendications

1. Procédé de préparation de mousses rigides de polyuréthanne présentant une faible conductibilité thermique, par réaction
a) de polyisocyanates organiques et/ou organiques modifiés, avec
b) au moins un composé comportant au moins 2 atomes d'hydrogène réactifs et un poids moléculaire supérieur à 400 g/mol, éventuellement
c) des agents d'allongement de chaîne et/ou agents de réticulation de faible poids moléculaire H-fonctionnels présentant des poids moléculaires inférieurs à 400 g/mol,
en présence
d) d'agents gonflants,
e) de catalyseurs, et éventuellement
f) d'additifs,
**caractérisé en ce qu'**au moins un des composants b) ou c) contient au moins un composé de la formule générale I 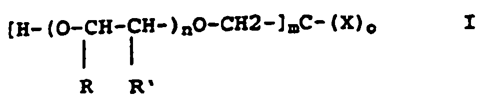 dans laquelle
R = méthyle, éthyle, alkyle en C₃-C₆, hydrogène
R' = méthyle, éthyle, alkyle en C₃-C₆, benzyle, hydrogène
n = 0 à 4,
m = 1 à 3,
o = 1 à 3,
X = n-alkyle, isoalkyle, néoalkyle ou cycloalkyle, aralkyle, benzyle, aryle, et
m + o est égal à 4,
et, comme agent gonflant d), on met en oeuvre du cyclopentane ou un mélange de cyclopentane et d'au moins un composé à faible point d'ébullition qui est miscible de manière homogène avec du cyclopentane.

2. Procédé suivant la revendication 1, **caractérisé en ce que**, comme composés de la formule générale I, on met en oeuvre du triméthylolpropane, du triméthyloléthane ainsi que leurs produits de réaction avec des oxydes d'alkylène.

3. Procédé suivant la revendication 1, **caractérisé en ce que**, comme composés de la formule générale I, on met en oeuvre des produits de la réaction de triméthylolpropane et/ou de triméthyloléthane avec des oxydes d'alkylène ayant un indice d'hydroxyle de l'ordre de 700 mg de KOH/g à 2000 mg de KOH/g.

4. Procédé suivant la revendication 1, **caractérisé en ce que** le composé de la formule générale I se trouve en une quantité de 3 à 50 % en poids, par rapport à la somme des composants b), c), e) et f).

5. Procédé suivant la revendication 1, **caractérisé en ce que** les composants a), b) et c) contiennent une teneur en radicaux aromatiques d'au moins 32 % en poids, par rapport au poids de la mousse rigide de PU résultante.

6. Procédé suivant la revendication 1, **caractérisé en ce que**, comme polyisocyanates organiques (a), on utilise
des polyisocyanates aromatiques choisis parmi le groupe des diisocyanates de 4,4'-, 2,4'- et 2,2'-diphénylméthane, des polyisocyanates de polyphényl-polyméthylène, et des diisocyanates de 2,4- et 2,6- toluylène, et
des mélanges d'au moins 2 des polyisocyanates cités.

7. Procédé suivant la revendication 1, **caractérisé en ce que**, comme polyisocyanates organiques (a), on utilise des mélanges de diisocyanates de diphénylméthane et de polyisocyanates de polyphényl-polyméthylène avec une teneur en isomères de diisocyanate de diphénylméthane de 30 à 80 % en poids.

8. Procédé suivant l'une des revendications 1 à 3, **caractérisé en ce que**, comme composés (b), on utilise des composés polyhydroxylés ayant une fonctionnalité de 2 à 8 et un poids moléculaire de 400 à 6000.

9. Procédé suivant la revendication 8, **caractérisé en ce que**, comme composés (b), on utilise des polyéthers-polyols ayant une fonctionnalité de 2 à 8 et un poids moléculaire de 400 à 6000 qui sont préparés par polyaddition anionique d'au moins un oxyde d'alkylène sur au moins un composé aromatique présentant au moins un groupe hydroxyle, amino et/ou carboxyle et comportant au moins 2 atomes d'hydrogène réactifs, comme molécule de départ.

10. Procédé suivant la revendication 8, **caractérisé en ce que**, comme composés (b), on utilise des polyéthers-polyols ayant une fonctionnalité de 2 à 8 et un poids moléculaire de 400 à 6000 qui sont préparés par polyaddition anionique d'au moins un oxyde d'alkylène sur au moins une molécule de départ aromatique du groupe des acides polycarboxyliques aromatiques, des acides hydroxycarboxyliques aromatiques et des acides aminocarboxyliques aromatiques, des monoamines et polyamines aromatiques, des polyphénols et des produits de condensation de Mannich à base de phénols, de formaldéhydes et de dialcanolamines.

11. Procédé suivant la revendication 10, **caractérisé en ce que**, comme molécules de départ, on utilise des polyamines aromatiques du groupe des 1,2-, 1,3- et 1,4- phénylènediamines, des 2,3-, 2,4-, 3,4- et 2,6-toluylènediamines, des 4,4'-, 2,4'- et 2,2'-diamino-diphénylméthanes, des polyphényl-polyméthylène-polyamines et des mélanges d'au moins deux des polyamines citées.

12. Procédé suivant l'une des revendications 5 à 7, **caractérisé en ce que**, comme oxydes d'alkylène, on utilise de l'oxyde de 1,2-propylène et/ou de l'oxyde d'éthylène.

13. Procédé suivant l'une des revendications 1 à 8, **caractérisé en ce que**, comme agent gonflant (d), on utilise du cyclopentane (d1) en combinaison avec de l'eau.

14. Procédé suivant l'une des revendications 1 à 8, **caractérisé en ce que**, comme agent gonflant (d), on utilise, en combinaison avec de l'eau, des mélanges (d2) contenant
(d2i) du cyclopentane, du cyclohexane ou un mélange de ces cycloalcanes, et
(d2ii) des composés à faible point d'ébullition qui sont miscibles de manière homogène avec du cyclopentane et/ou du cyclohexane.

15. Procédé suivant la revendication 12, **caractérisé en ce que**, comme composés d2ii), on utilise du n-butane, de l'iso-butane, du n-pentane, de l'iso-pentane, du formiate de méthyle, du 1,1,1,3,3-pentafluorobutane, du 1,1,1,3,3-pentafluoropropane, du 1,1,1,2-tétrafluoroéthane ou des mélanges de ces composés.

16. Utilisation de mousses rigides de polyuréthanne, préparées selon le procédé suivant une des revendications 1 à 10, comme couche intermédiaire pour des éléments composites et pour le remplissage d'espaces creux dans des enceintes frigorifiques ou des éléments de chauffage.

17. Utilisation de composés de la formule générale I, pour la préparation de mousses rigides de polyuréthanne ayant une conductibilité thermique réduite.
